(19) Europäisches Patentamt
European Patent Office
Office européen des brevets

(11) Veröffentlichungsnummer: **0 182 983**
**B1**

# (12) EUROPÄISCHE PATENTSCHRIFT

(45) Veröffentlichungstag der Patentschrift: **28.12.88**

(51) Int. Cl.⁴: **A 61 C 17/00**

(21) Anmeldenummer: **85110956.1**

(22) Anmeldetag: **30.08.85**

(54) **Gerät zum Entfernen von Plaque und Verfärbungen auf Zahnoberflächen.**

(30) Priorität: **30.10.84 DE 3439584**

(43) Veröffentlichungstag der Anmeldung: **04.06.86 Patentblatt 86/23**

(45) Bekanntmachung des Hinweises auf die Patenterteilung: **28.12.88 Patentblatt 88/52**

(84) Benannte Vertragsstaaten: **AT CH DE FR IT LI NL**

(56) Entgegenhaltungen:
**EP-A- 0 072 487**
**EP-A- 0 143 617**
**DE-A- 3 212 207**
**US-A- 2 376 616**
**US-A- 3 987 550**
**US-A- 4 184 258**

(73) Patentinhaber: **EMDA Fabrik elektro-medizinischer und dentaler Apparate Georg Hartmann GmbH & Co. KG, Hanauer Landstrasse 139-145, D-6000 Frankfurt/Main (DE)**

(72) Erfinder: **Saupe, Martin, Edith-Stein-Strasse 34, D-6050 Offenbach/Rumpenheim (DE)**
Erfinder: **Dauernheim, Hans, Liebigstrasse 24, D-6072 Dreieich (DE)**
Erfinder: **Markl, Maxmillian, Vorderer Strasse 11, D-6240 Königstein 3 (DE)**

(74) Vertreter: **Knoblauch, Ulrich, Dr.-Ing., Kühhornshofweg 10, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung bezieht sich auf ein Gerät zum Entfernen von Plaque und Verfärbungen auf Zahnoberflächen, durch das ein Luft-Pulver-Gemisch und Wasser auf die zu reinigende Zahnoberfläche gesprüht wird, mit einem Pulverbehälter, einer Pulver aus dem Pulvervorrat im Pulverbehälter durch Druckluft aufnehmenden Wirbelkammer, die eine Einlassöffnung für die Druckluft und eine Auslassöffnung für das Luft-Pulver-Gemisch aufweist, und mit einem Handstück, das einen Anschlussteil für Zuführleitungen und einen Sprühkopf mit einer Austrittsdüse für das Luft-Pulver-Gemisch und das Wasser aufweist, der das Luft-Pulver-Gemisch aus der Wirbelkammer sowie das Wasser zuführbar sind.

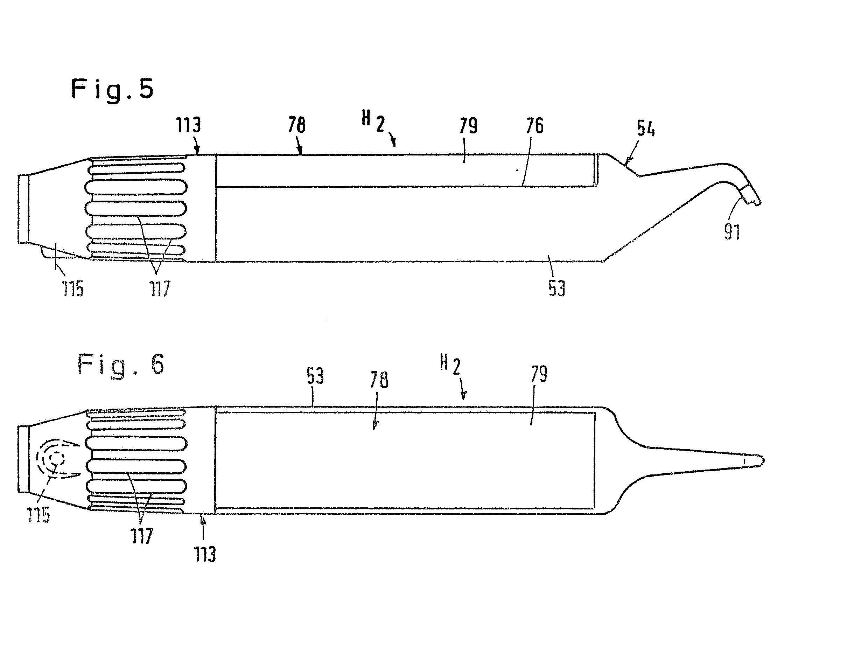

Bei einem bekannten Gerät dieser Art (EP-A 0 119 735) ist der gleichzeitig die Wirbelkammer aufweisende Pulverbehälter getrennt vom Handstück in einer Aufnahmevorrichtung untergebracht und über einen Schlauch mit dem Handstück verbunden, das eine Griffhülse aufweist, an der der Sprühkopf angebracht ist. Die Druckluft wird über ein Rohr in den Pulverbehälter geleitet, das den Boden des Pulverbehälters und das Pulver bis über dessen Füllstand hinaus durchsetzt. Unmittelbar über dem Boden des Pulverbehälters ist das Rohr mit weiten Schlitzen versehen, durch die das Pulver von der Druckluft angesaugt und in den Raum oberhalb des Pulvers mitgerissen wird, wobei es mit der Luft verwirbelt wird. Ein Teil der Druckluft wird durch ein mit Öffnungen versehenes, im Pulver endendes zweites Rohr (Fig. 5) unmittelbar in das Pulver geleitet. Ein weiterer Druckluftstrom gelangt unmittelbar in den Raum über dem Pulver. Diese Ausbildung bedingt eine stationäre Unterbringung des Pulverbehälters, um das Pulver stets auf dem Boden des Pulverbehälters zu halten und eine umgekehrte Lage des Pulverbehälters zu vermeiden. Die getrennte Aufnahmevorrichtung für den Pulverbehälter ist jedoch aufwendig. Darüber hinaus besteht die Gefahr, dass das aus Salz bestehende Pulver auf dem langen Weg vom Vorratsbehälter zum Handstück Feuchtigkeit aufnimmt und die Pulverleitungen, insbesondere im Sprühkopf, verkrusten und verstopfen. Demzufolge ist bei diesem bekannten Gerät eine häufige Reinigung zur Einhaltung eines gleichmässigen Luft-Pulver-Stromes erforderlich.

Bei dem aus der US-A-4 184 258 bekannten Gerät zum Behandeln von Zähnen mittels eines Luft-Pulver-Gemisches ohne Wasser ist in einem Handstück eine trichterförmige Pulverkammer ausgebildet, an deren Austrittsöffnung ein Schieber vorbeibewegbar ist, der das allein unter seinem Eigengewicht aus der Pulverkammer austretende Pulver portionsweise in einen zu einer Austrittsdüse führenden Druckluftkanal befördert. Dieses Gerät ist nur in einer vorbestimmten Lage mit nach unten gerichteter Trichter-Austrittsöffnung funktionsfähig und ermöglicht keinen kontinuierlichen Luftstrom mit gleichmässiger Verwirbelung des Pulvers im Luftstrom.

Das aus der DE-A-3 212 207 bekannte Gerät zum Entfernen von Zahnbelag mittels eines mit Schweisspulver versetzten Gasstroms und Wasser enthält in einem mit einem Handstück über Förderleitungen verbundenen trichterförmigen Pulverbehälter oberhalb einer Falleitung ein Sieb zum Sortieren der PUlverkörner. Der Trichter mündet über der Falleitung in eine zylindrische Wirbelkammer, in die tangential eine Druckluftleitung mündet und aus der eine der Förderleitungen zum Handstück führt. Diese Förderleitung steht über eine Druckausgleichsleitung mit dem oberen Raum des Pulverbehälters in Verbindung. Eine die Wirbelkammer begrenzende Membran liegt unter Federkraft an der Austrittsöffnung der in die Wirbelkammer ragenden Falleitung an. Bei Überschreitung eines vorbestimmten Luftdrucks in der Wirbelkammer gibt die Membran die Austrittsöffnung der Falleitung frei, so dass das Pulver nach dem Druckausgleich zwischen dem oberen Raum des Pulverbehälters und der Wirbelkammer lediglich unter seinem Eigengewicht aus dem Pulverbehälter in die Wirbelkammer rieseln kann. Auch bei dieser Ausführung besteht mithin aufgrund der relativ langen Förderleitungen zwischen Pulverbehälter und Handstück die Gefahr einer Verstopfung.

Ein Einbau des Pulverbehälters in das Handstück würde insofern zu Schwierigkeiten führen, als dann das Handstück bei der Zahnbehandlung ebenfalls in einer vorbestimmten Lage, d.h. mit der Falleitung nach unten, gehalten werden müsste, um einen Austritt des Pulvers aus dem Pulverbehälter in die Wirbelkammer zu ermöglichen.

Die US-A-3 987 950 zeigt ein Gerät zum Behandeln von Zähnen mittels einer Paste, die aus einem Behälter am Handstück mittels eines durch Druckwasser betätigten Kolbens unmittelbar über eine Förderleitung zu einer rotierenden Auftragkappe gedrückt wird. Hier wird mithin nicht mittels eines Luft-Pulver-Gemischs gearbeitet. Bei Verwendung einer Paste tritt zwar nicht in dem Masse wie bei einem Pulver die Schwierigkeit eines unbeabsichtigten selbsttätigen Austritts des Schleifmittels aus dem Vorratsbehälter, jedoch in viel höherem Masse die Gefahr einer Verstopfung auf.

Der Erfindung liegt die Aufgabe zugrunde, ein Gerät der gattungsgemässen Art anzugeben, dessen Aufbau einfacher ist und über längere Zeit hinweg einen gleichmässigen Luft-Pulver-Strom sicherstellt.

Erfindungsgemäss ist diese Aufgabe dadurch gelöst, dass der Pulverbehälter und die Wirbelkammer im Handstück vorgesehen sind, dass der Pulverbehälter mit der Wirbelkammer über eine die Wirbelkammer begrenzende Lochplatte in Austauschverbindung steht, und dass der Pulverbehälter einen druckluftbeaufschlagten Kolben enthält, der das Pulver zur Lochplatte drückt.

Bei diesem Gerät entfällt ein Tischgerät, und die Pulverleitung vom Pulverbehälter bis zur Austrittsdüse ist erheblich kürzer. Das Gerät hat daher einen einfacheren Aufbau. Sodann ist die Gefahr einer Verkrustung der Pulverleitung geringer. Es stellt daher über längere Zeit hinweg einen gleichmässigeren Luft-Pulver-Strom bei der Behandlung sicher. Ferner kann die Grösse der Löcher der Lochplatte so gewählt werden, dass die Löcher die Pulverteilchen des im Pulverbehälter enthaltenen Pulvers gerade noch durchlassen. Gegebenenfalls braucht der Zahnarzt bei der Handhabung des Handstücks nicht darauf zu achten, dass es eine vorbestimmte Lage beibehält, insbesondere eine solche, in der sich die Wirbelkammer oberhalb des Pulvervorrats befindet, um eine Überfüllung der Wirbelkammer mit Pulver unter dem Eigengewicht des Pulvers und damit eine Verstopfung des aus der Wirbelkammer zur Austrittsdüse führenden Kanals zu vermeiden. Denn die Lochplatte verhindert weitgehend einen Übertritt des Pulvers aus dem Pulverbehälter in die Wirbelkammer unter dem Eigengewicht des Pulvers. Durch den Kolben wird das Pulver stets im wesentlichen nur an der Lochplatte anliegend gehalten, so dass es leicht durch den in die Wirbelkammer und durch die Lochplatte hindurch in den Pulverbehälter eintretenden Luftstrom aus dem Pulverbehälter in die Wirbelkammer mitgerissen wird. Daher ist auch dann, wenn das Handstück so gehalten wird, dass sich die Wirbelkammer oberhalb des Pulverbehälters befindet, eine gleichmässige Verwirbelung und Abfuhr des Pulvers sichergestellt.

Sodann ist es besonders günstig, wenn die Druckluft-Einlassöffnung der Wirbelkammer gegenüber der Lochplatte liegt. Hierbei wird der durch die Einlassöffnung in die Wirbelkammer eintretende Luftstrom weitgehend senkrecht auf die Lochplatte gerichtet, so dass er die Lochplatte weitgehend ungehindert durchsetzt und für eine sichere Mitnahme des Pulvers aus dem Pulverbehälter in die Wirbelkammer und dort für eine gleichmässige Verwirbelung sorgt.

Die Druckluft kann dem Kolben über eine Drossel zugeführt werden. Dies stellt sicher, dass der Kolben seine Lage, insbesondere nach dem Abschalten, über längere Zeit beibehält, und zwar unabhängig von der Lage, in der das Handstück gehalten wird, und unabhängig von einer Änderung des Luftdrucks in der Wirbelkammer. Wenn der Luftdruck für eine Weiterbehandlung daher kurz nach dem Abschalten wieder eingeschaltet wird, ist ein Leerhub des Kolbens weitgehend vermieden und damit von Anfang an ein weitgehend gleichmässiger Luft-Pulver-Strom sichergestellt.

Bei einem gattungsgemässen Gerät ist der Austrittskanal für das Luft-Pulver-Gemisch in der Austrittsdüse von dem Wasser-Austrittskanal in der Weise getrennt, dass der Wasser-Austrittskanal den Austrittskanal für das Luft-Pulver-Gemisch umgibt und beide in einer Ebene enden. Hierbei besteht jedoch die Gefahr, dass nach dem Abschalten des Wasserstroms an der Mündung des Wasser-Austrittskanals austretendes Restwasser in die Mündung des Austrittskanals für das Luft-Pulver-Gemisch gelangt, so dass dort restliche Pulverteilchen verkrusten. Dies lässt sich weitgehend dadurch vermeiden, dass die Mündung des Austrittskanals für das Luft-Pulver-Gemisch axial gegenüber der Mündung des Wasseraustrittskanals vorsteht.

Zwar könnte die Wirbelkammer auch im Pulverbehälter ausgebildet sein. Vorzugsweise weist jedoch der Sprühkopf die Wirbelkammer auf. Dies erleichtert die Ausbildung des Pulverbehälters als Patrone.

Sodann kann dafür gesorgt sein, dass der Anschlussteil Eingänge für Wasser und Druckluft aufweist und zum Anschliessen an ein entsprechendes genormtes Kupplungsstück eines zahnärztlichen Bohrers, das dessen Wasser- und Druckluftversorgung dient, unter Herstellung einer dichten Verbindung zwischen das Kupplungsstück durchsetzenden Wasser- und Druckluftkanälen und den Wasser- und Drucklufteingängen des Anschlussteils ausgebildet ist. Dies ermöglicht ein einfaches Ankuppeln des Handstücks an das herkömmliche Kupplungsstück eines zahnärztlichen Bohrers, das in der Regel an dem Dentalgerät eines Zahnarztes für die Wasser- und Luftversorgung des zahnärztlichen Bohrers vorgesehen ist. Eine eigens für das der Prophylaxe dienende vorliegende Gerät vorgesehene Wasser- und Luftversorgungseinrichtung kann daher entfallen.

Die Lochplatte ist vorzugsweise als Sieb ausgebildet und bedarf daher keiner Spezialanfertigung, da Siebe mit der gewünschten Maschenweite von beispielsweise etwa 100 bis 130 Mikrometer handelsüblich sind.

Um zu erreichen, dass der Öffnungswinkel des an der Austrittsdüse austretenden Stroms der Luft-Pulver-Gemisches höchstens etwa 10° beträgt, so dass der Strom möglichst vollständig in die Zahnzwischenräume gelangt, sollte der Endabschnitt des Austrittskanals für das Luft-Pulver-Gemisch bei einer Länge von wenigstense etwa 5 bis 12 mm einen Durchmesser von etwa 0,4 bis 0,8 mm, vorzugsweise 0,7 mm, aufweisen.

Vorzugsweise ist sodann dafür gesorgt, dass bei einem Handstück mit Griffhülse diese mit dem Sprühkopf zusammensteckbar ist und der Pulverbehälter die Form eines bei abgenommenem Sprühkopf in die Griffhülse einführbaren Rohres aufweist. Hirbei kann der Pulverbehälter als Patrone ausgebildet sein und leicht ausgewechselt werden.

Das Gerät kann alternativ in der Weise ausgebildet sein, dass das Handstück eine seitliche Öffnung zum Einlegen des Pulverbehälters in einen hohlen Körperteil des Handstücks aufweist und der Anschlussteil in einer axialen Bohrung in dem Körperteil bis gegen den Pulverbehälter zu dessen Lagesicherung verschiebbar und verriegelbar ist. Auf diese Weise entfällt das Demontieren des Handstücks, um den Pulverbehälter einzusetzen oder auszuwechseln.

Hierbei kann dafür gesorgt sein, dass der Anschlussteil durch die Drehverschiebung mit einem axialen Vorsprung abgedichtet in das hinten offene Ende des etwa rohrförmigen Pulverbehälters gegen die Wand des Pulverbehälters abgedichtet einführbar ist, dass das vordere Ende des Pulverbehälters durch die Lochplatte verschlossen ist und im verriegelten Zustand des Anschlussteils an einem Umfangsrand der Wirbelkammer abgedichtet anliegt, und dass durch den Anschlussteil und den Körperteil des Handstücks verlaufende Abschnitte von Wasser- und Luftzuführkanälen durch eine fluiddichte Drehkupplung verbunden sind und ein Druckluftkanal, den Vorsprung durchsetzend, im Pulverbehälter auf der dem Pulver abgewandten Seite d es Kolbens mündet. Der in den Pulverbehälter ragende Vorsprung bewirkt hierbei neben der Zuführung der den Kolben betätigenden Druckluft gleichzeitig eine radiale Lagesicherung des Pulverbehälters durch Formschluss, während die fluiddichte Drehkupplung die Zufuhr von Wasser und Druckluft über den Anschlussteil in die Wirbelkammer sicherstellt, obwohl der Anschlussteil und der Körperteil des Handstücks relativ zueinander drehbar sind.

Die Drehkupplung kann auf einfache Weise durch flexible Verbindungsschläuche gebildet sein.

Ferner kann der Anschlussteil und der Körperteil des Handstücks durch einen Bajonett-Verschluss verbunden sein. Dieser gestattet durch eine geringfügige Drehung eine gegenseitige Verriegelung der beiden Teile unter gleichzeitiger Lagesicherung des Pulverbehälters.

Insbesondere kann der Bajonett-Verschluss wenigstens eine Führungsnut in der Aussenseite des Anschlussteils für einen Bolzen im Körperteil des Handstücks und die Führungsnut einen weitgehend schraubenlinienförmigen Verlauf aufweisen, dessen Steigung von einem hohen positiven Wert in einem langen Abschnitt der Führungsnut auf einen geringen negativen Wert in einem kurzen Abschnitt der Führungsnut übergehen, während der Bolzen am Ende der Verriegelungsbewegung in den die negative Steigung aufweisenden kurzen Abschnitt der Führungsnut eingreift. Dies ergibt eine besonders einfache Ausgestaltung des Bajonett-Verschlusses.

Günstig ist es, wenn der Austrittskanal für das Luft-Pulver-Gemisch über seine gesamte Länge einen konstanten Querschnitt aufweist. Dadurch wird eine Verstopfung des Austrittskanals verhindert. Ferner ist er leicht zu reinigen.

Die Erfindung und ihre Weiterbildungen werden nachstehend anhand der Zeichnung bevorzugter Ausführungsbeispiele näher beschrieben. Es zeigen:

Fig. 1 eine Seitenansicht eines ersten Ausführungsbeispiels eines erfindungsgemässen Gerätes, teilweise im Axialschnitt I–I der Fig. 2,

Fig. 2 der Schnitt II–II der Fig. 1,

Fig. 3 den Schnitt III–III der Fig. 1,

Fig. 4 einen Axialschnitt durch ein herkömmliches Kupplungsstück eines zahnärztlichen Bohrers für den Anschluss von Wasser- und Luftleitungen, das in gleicher Weise mit einem Anschlussteil des erfindungsgemässen Gerätes nach den Fig. 1 bis 3 kuppelbar ist,

Fig. 5 eine Seitenansicht eines zweiten Ausführungsbeispiels eines erfindungsgemässen Gerätes,

Fig. 6 eine Draufsicht auf das Gerät nach Fig. 5,

Fig. 7 einen Axialschnitt des Gerätes nach den Fig. 5 und 6 längs der Linie VII–VII der Fig. 8,

Fig. 8 den Schnitt VIII–VII der Fig. 7,

Fig. 9 den Schnitt IX–IX der Fig. 7 bei leerem Pulverbehälter,

Fig. 10 eine Seitenansicht des Anschlussteils des Gerätes nach den Fig. 5 bis 9 und

Fig. 11 einen Axialschnitt durch ein anderes herkömmliches Kupplungsstück eines zahnärztlichen Bohrers für den Anschluss von Wasser- und Luftleitungen, das in gleicher Weise mit einem Anschlussteil des erfindungsgemässen Gerätes nach den Fig. 5 bis 10 kuppelbar ist.

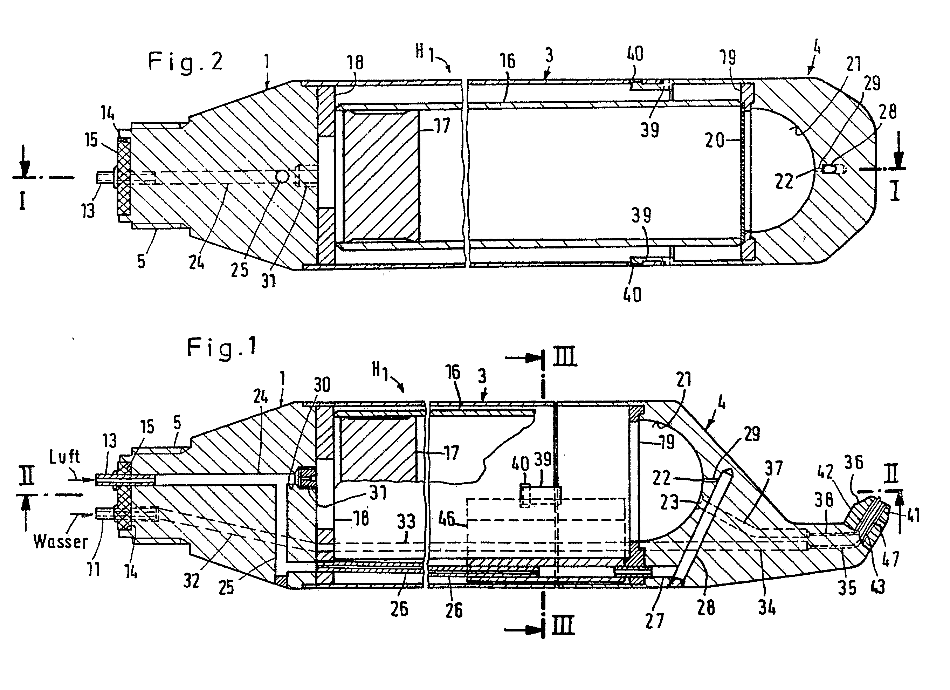

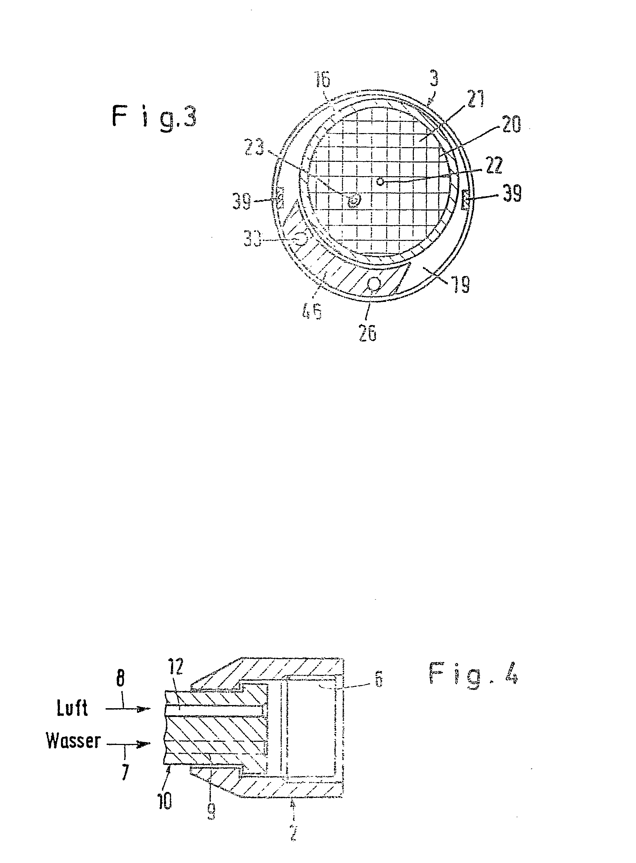

Das in den Fig. 1 bis 3 dargestellte Gerät zum Entfernen von Plaque und Verfärbungen auf Zahnoberflächen hat die Form eines Handstücks $H_1$ mit einem Anschlussteil 1 zum Anschrauben eines herkömmlichen Kupplungsstücks 2 (Fig. 4), das der Zuführung von Druckluft und Wasser dient, einer auf den Anschlussteil 1 aufsteckbaren Griffhülse 3 und einem an die Griffhülse 3 unter Verrastung ansteckbaren Sprühkopf 4.

Der Anschlussteil 1 hat ein Gewinde 5, das in das Gewinde 6 des herkömmlichen Kupplungsstücks 2 (Fig. 4) eines herkömmlichen (nicht dargestellten) zahnärztlichen Bohrers passt, um entweder den Bohrer oder das Gerät nach den Fig. 1 bis 3 mit Druckluft und Wasser zu versorgen.

Das Wasser ist in Fig. 4 als Pfeil 7 und die Druckluft als Pfeil 8 dargestellt. Das Wasser 7, bei dem es sich im Falle des Anschlusses des Kupplungsstücks 2 an den Bohrer oder an den Anschlussteil 1 um Spraywasser handelt, wird über einen Kanal 9 in einer Leitung 10 zugeführt und gelangt im Falle des Anschlusses des Kupplungsstücks 2 an den Anschlussteil 1 in ein Rohrstück 11. Die Druckluft 8, bei der es sich im Falle des Anschlusses des Kupplungsstücks 2 an den Bohrer um die Antriebsluft handelt, gelangt im Falle des Anschlusses des Kupplungsstücks 2 an den Anschlussteil 1 über einen Kanal 12 in ein Rohrstück 13. Die Rohrstücke 11 und 13 passen mit ihren axial vorstehenden Enden in die Kanäle 9 und 12, und die Verbindung von Anschlussteil 1 und Kupplungsstück 2 wird durch eine in einer stirnseitigen Vertiefung 14 des Anschlussteils 1 angeordnete Dichtungsscheibe 15 abgedichtet.

Die Griffhülse 3 enthält einen zylindrischen Behälter 16 für Pulver. Bei dem Pulver handelt es sich um ein Salz, wie Natriumbicarbonat, das zum Entfernen von Plaque und Verfärbungen auf Zahnoberflächen geeignet ist.

In dem Pulverbehälter 16 ist ein Kolben 17 axial verschiebbar und gegen die Innenseite des Pulverbehälters 16 abgedichtet angeordnet. Das in den Fig. 1 und 2 nicht dargestellte Pulver befindet sich in dem Pulverbehälter 16 nur auf der einen, in den Fig. 1 und 2 rechten Seite des Kolbens 17.

Der Öffnungsrand des Pulverbehälters 16 ist auf der einen Stirnseite des Pulverbehälters 16 durch eine ringförmige Dichtungsscheibe 18 gegen den Anschlussteil 1 und auf der anderen Stirnseite durch eine ringförmige Dichtungsscheibe 19 gegen den Sprühkopf 4 abgedichtet.

In der dem Sprühkopf 4 zugekehrten Öffnung des Pulverbehälters 16 ist eine Lochplatte 20 in Form eines Siebes aus nichtrostendem Stahl eingesetzt, die eine im Sprühkopf 4 ausgebildete, etwa halbkugelförmige Wirbelkammer 21 begrenzt. Die Loch- bzw. Maschenweite der Lochplatte 20 beträgt etwa 100 bis 130 Mikrometer und ist etwa gleich dem Querschnitt der im Pulverbehälter 16 enthaltenen länglichen Pulverteilchen oder geringfügig grösser. Senkrecht gegenüber der Mitte der Lochplatte 20 ist die Wand der Wirbelkammer 21 mit einer Einlassöffnung 22 für die Druckluft 8 versehen. Neben dieser Einlassöffnung ist eine Auslassöffnung 23 für ein Luft-Pulver-Gemisch in der Wand der Wirbelkammer 21 ausgebildet.

Das den Eingang für die Druckluft bildende Rohr 13 steht über Kanäle 24, 25, eine Rohr 26 und Kanäle 27, 28, 29, von denen der Kanal 29 eine Drossel bildet, mit der Einlassöffnung 22 und über den Kanal 24 sowie einen Kanal 30, der eine weitere Drossel 31 in Form eines eine enge Bohrung aufweisenden Einsatzes aufweist, mit der Druckseite des Kolbens 17 in Verbindung. Das den Eingang für das Wasser bildende Rohrstück 11 steht über einen Kanal 32, ein Rohr 33 und Kanäle 34, 35 mit einer Austrittsdüse 36 in Verbindung.

Die Wirbelkammer 21 steht über die Auslassöffnung 23, einen Kanal 37 und einen Kanal 38, der eine dritte Drossel bildet, mit der Austrittsdüse 36 in Verbindung.

Der Sprühkopf 4 greift mit am Rand eines dünnen Wandabschnitts des Sprühkopfes 4 axial abstehenden federnden Fortsätzen 39, die etwa hakenförmig nach innen und aussen abgewinkelt sind, in Löcher 40 der Griffhülse 3 ein.

Im Zwischenraum zwischen Griffhülse 3 und Pulverbehälter 16 ist eine teilzylindrische Stützplatte 46 (s. insbesondere Fig. 3) angeordnet, die den Pulverbehälter 16 in der Griffhülse 3 radial abstützt und von den Rohren 26, 33 durchsetzt ist.

Um im Behälter 16 enthaltenes Pulver auf die Oberfläche der Zähne eines Patienten zu sprühen, so dass diese wie durch ein Sandstrahlgebläse gereinigt werden, wird die Druckluft einerseits über die Drossel 31 auf die Druckseite des Kolbens 17 (links in den Fig. 1 und 2) und andererseits über den gleichzeitig als Düse wirkenden Kanal 29 in die Wirbelkammer 21 etwa senkrecht auf die Lochplatte 20 geblasen. Der durch die mittleren Löcher der Lochplatte 20 dringende Luftstrom tritt in den Pulverbehälter 16 ein und verdrängt das Pulver unter Aufwirbelung über die im Randbereich der Lochplatte 20 ausgebildeten Löcher in die Wirbelkammer 21, wo das Luft-Pulver-Gemisch beim Zusammentreffen der Ströme des Luft-Pulver-Gemisches am Scheitel der Wirbelkammer 21 und mit dem durch die Einlassöffnung 22 eintretenden Frischluftstrom weiter verwirbelt wird, bevor es über die Auslassöffnung 23 und die Kanäle 37, 38 in der Austrittsdüse 36 austritt. Durch die Verengung des Austrittsquerschnitts im Bereich des Kanals 38 gegenüber dem des Kanals 37 wird der austretende Strom des Luft-Pulver-Gemisches beschleunigt, so dass er die erforderliche Auftreffgeschwindigkeit erhält, um die Plaque oder Einfärbung von der Zahnoberfläche sicher zu entfernen. In dem Masse, wie das Pulver aus dem Pulverbehälter 16 durch die Lochplatte 20 austritt, wird der Kolben 17 in den mit Pulver gefüllten Teil des Pulverbehälters 16 nachgeschoben, so dass pulverfreie Hohlräume im Pulverbehälter 16 vor der endgültigen Leerung des Pulverbehälters weitgehend vermieden werden und ein stets gleichmässiger Austrittsstrom des Luft-Pulver-Gemisches sichergestellt ist. Dadurch, dass die Weite der Löcher in der Lochplatte 20 etwa gleich dem oder nur geringfügig grösser als der Querschnitt der Pulverteilchen gewählt ist, in Verbindung mit der länglichen Form der Pulverteilchen, kann das Pulver praktisch nicht durch sein Eigengewicht aus dem Pulverbehälter 16 in die Wirbelkammer 21 eindringen, wenn das Gerät mit dem Sprühkopf 4 nach unten gehalten wird und die Druckluftzufuhr abgeschaltet ist. Die Gleichmässigkeit des aus der Austrittsdüse 36 austretenden Luft-Pulver-Stroms ist daher auch weitgehend unabhängig davon sichergestellt, in welcher Lage das Gerät gehalten wird, ob horizontal, vertikal oder schräg, mit dem Sprühkopf 4 nach oben oder nach unten.

Die Drossel 31 hat einen kleineren Drosselquerschnitt als die Drossel 29 und diese wiederum einen kleineren Drosselquerschnitt als die Drossel 38. Die Drosseln 31, 29 und 38 gewährleisten daher, dass der Kolben 17 seine Lage nach dem Abschalten der Druckluft zunächst noch beibehält, so dass er bei aufrechter Haltung des Gerätes mit dem Sprühkopf 4 nach oben nicht sofort zurückfällt und bei unmittelbar darauffolgender erneuter Einschaltung der Druckluft nicht erst einen längeren Leerhub auszuführen braucht. Gleichzeitig mit dem Aufsprühen des Pulvers auf die Zähne kann auch das Wasser 7 über das Kupplungsstück 2 dem Rohrstück 11 zugeführt und über den Kanal 32, das Rohr 33 und die Kanäle 34, 35 auf die Zähne aufgesprüht werden.

Die Kanäle 35 und 38 enden in nebeneinander durch eine Bohrung 41 in der Austrittsdüse 36 verlaufenden Rohren 42 und 43, von denen das Rohr 42 zur Verhinderung eines Übertritts von Restwasser von der Mündung des Kanales 35 in die Mündung des Kanals 38, wenn das Gerät abgeschaltet wird, etwas über die Stirnseite der Austrittsdüse 36 hervorsteht. Das Restwasser kann vielmehr durch Kapillarwirkung in der Bohrung 41 aufgefangen werden. Zusätzlich schliesst sich an die Bohrung 41 etwa senkrecht zu dieser in der Austrittsdüse 36 ein enger Kanal 47 an, der ins Freie führt und ein Absaugen des sich in Bohrung 41 ansammelnden Restwassers durch den an der Mündung der Rohre 41, 42 beim Sprühen entstehenden Unterdruck gestattet.

Der Öffnungswinkel des an der Austrittsdüse 36 austretenden Stromes des Luft-Pulver-Gemisches sollte etwa 10° oder weniger betragen. Dadurch wird erreicht, dass der Strom weitgehend vollständig in die Zahnzwischenräume gelangt. Einen solchen Winkel erhält man bei der üblichen Pulver-Korngrösse von etwa 100 µm, wenn das den Endabschnitt des Austrittskanals 38 bildende Rohr 42 eine Länge von mindestens 5 bis 12 mm und einen Durchmesser von etwa 0,4 bis 0,8 mm, vorzugsweise etwa 0,7 mm, aufweist.

Im Beispiel beträgt der Öffnungswinkel etwa 10°, der Durchmesser etwa 0,7 mm und die Länge etwa 5 bis 12 mm.

Der Pulverbehälter 16 kann als Patrone ausgebildet sein, die durch einfaches Abziehen des Sprühkopfes 4 von der Griffhülse 3 – nachdem die Fortsätze 39 durch radiales Einwärtsdrücken der angrenzenden dünnen Wandbereiche des Sprühkopfes 4 so weit radial nach innen gebogen wurden, dass sie nicht mehr in die Löcher 40 eingreifen – ausgewechselt werden kann.

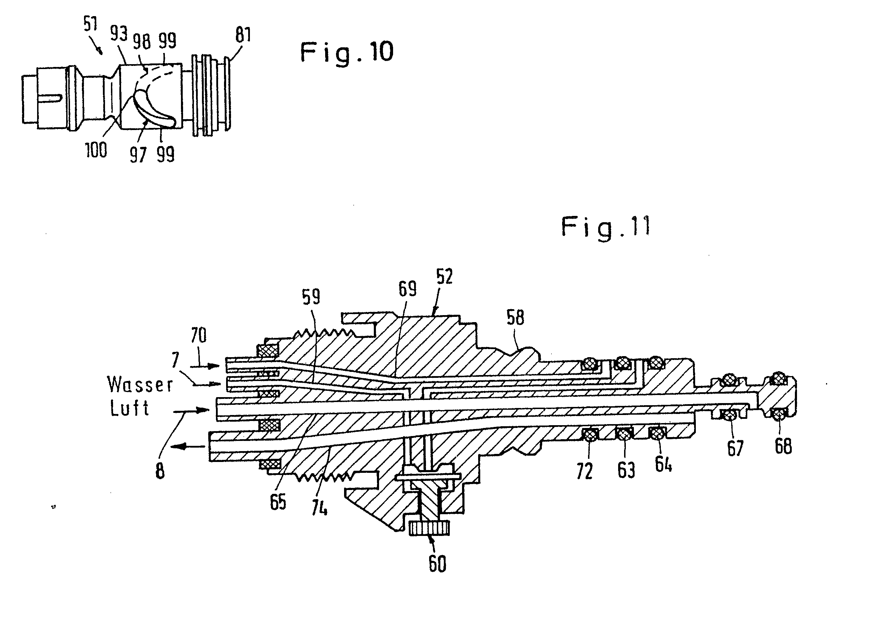

Das in den Fig. 5 bis 10 als zweites Ausführungsbeispiel dargestellte Gerät zum Entfernen von Plaque und Verfärbungen auf Zahnoberflächen hat ebenfalls die Form eines Handstücks $H_2$ mit einem Anschlussteil 51 zum Aufstecken auf ein herkömmliches Kupplungsstück 52 (Fig. 11), das der Zufuhr von Wasser 7 und Druckluft 8 dient, und einem auf den Anschlussteil 51 aufsteckbaren Körperteil 53, der einteilig mit einem Sprühkopf 54 verbunden ist.

Der Anschlussteil 51 passt auf das herkömmliche Kupplungsstück 52 (Fig. 11) eines herkömmlichen (nicht dargestellten) zahnärztlichen Bohrers, um entweder den Bohrer oder das Gerät nach den Fig. 5 bis 10 mit Wasser 7 und Druckluft 8 zu versorgen. Der Anschlussteil hat eine Rastkugel 55, die eine radiale Bohrung 56 im Anschlussteil 51 teilweise durchsetzt und durch eine C-förmige Feder 57 belastet ist, welche die Kugel 55 in eine Ringnut 58 des Kupplungsstücks 52 einrasten lässt, wenn das Handstück $H_2$ mit dem Anschlussteil 51 auf das Kupplungsstück 52 geschoben wird.

Das Wasser 7, bei dem es sich im Falle des Anschlusses des Kupplungsstücks 52 an den Bohrer oder an den Anschlussteil 51 um Spraywasser handelt, wird über einen Kanal 59 im Handstück 52, der durch ein einstellbares Ventil 60 absperrbar ist, einem Ringkanal 61 in Form einer Ringnut in der Innenseite einer axialen Bohrung 62 des Anschlussteils 51 zugeführt. Wenn das Kupplungsstück 52 in die Bohrung 62 des Anschlussteils 51 eingeführt ist, wird der Ringkanal 61 durch Ringdichtungen 63 und 64 (Fig. 11) abgedichtet. Die Druckluft 8, bei der es sich im Falle des Anschlusses des Kupplungsstücks 52 an den Bohrer um die Antriebsluft handelt, gelangt im Falle des Anschlusses des Kupplungsstücks 52 an den Anschlussteil 51 über einen Kanal 65 des Kupplungsstücks 52 in einen Ringkanal 66 in Form einer Ringnut in der Innenseite der Bohrung 62. Der Ringkanal 66 wird nach Einführung des Kupplungsstücks 52 in die Bohrung 62 des Anschlussteils 51 durch Dichtungsringe 67 und 68 abgedichtet.

Über einen weiteren Kanal 69 im Kupplungsstück 52 wird Sprayluft 70 einem Ringkanal 71 in Form einer Ringnut in der Innenseite der Bohrung 62 zugeführt. Der Ringkanal 71 wird durch die Ringdichtung 63 und eine weitere Ringdichtung 72 abgedichtet und lässt die Sprayluft über eine radiale Bohrung 73 ungenutzt austreten, da die Sprayluft nur bei Anschluss des Kupplungsstücks 52 an einen herkömmlichen zahnärztlichen Bohrer benötigt wird. Ein vierter Kanal 74 im Kupplungsstück 52 dient als Rücklaufkanal, der ebenfalls nur bei Anschluss an einen zahnärztlichen Bohrer benötigt wird.

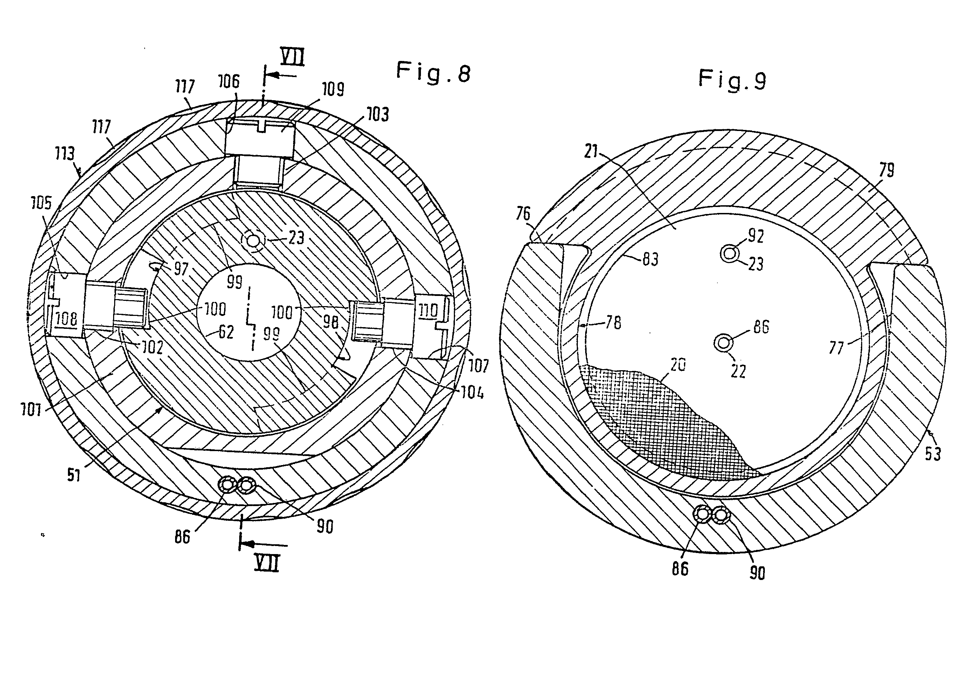

Der Körperteil 53 des Handstücks $H_2$ enthält einen seitlich mit einer langgestreckten Öffnung 76 versehenen teilzylindrischen Hohlraum 77, in den ein weitgehend zylindrischer Pulverbehälter 78 eingelegt ist. Der Pulverbehälter 78 verschliesst mit einer im Querschnitt etwa pilzkopfförmigen Erweiterung 79 (siehe insbesondere Fig. 9) die Öffnung 76 des Körperteils 53.

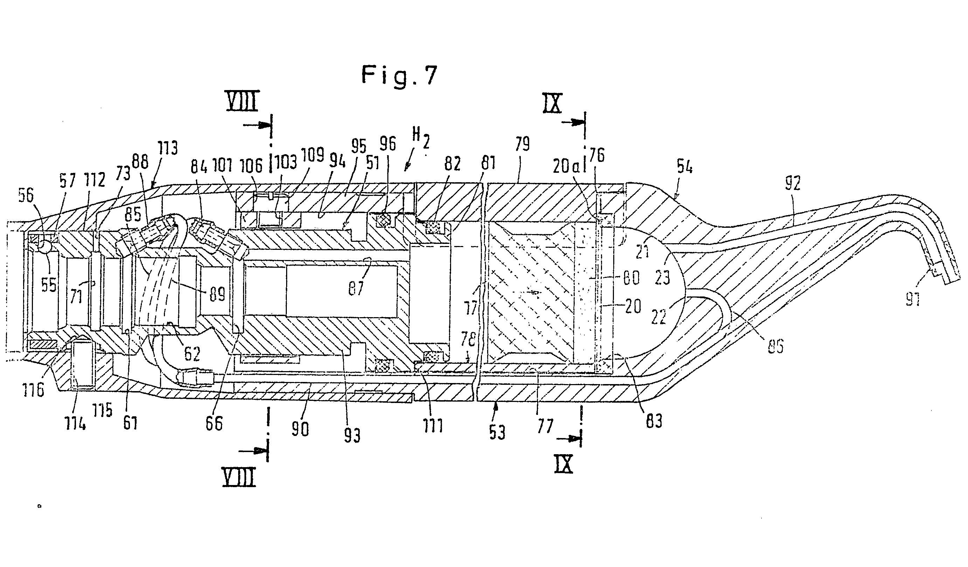

In dem Pulverbehälter 78 ist wieder der Kolben 17 axial verschiebbar gegen die Innenseite des Pulverbehälters 78 abgedichtet angeordnet. Das Pulver 80 befindet sich in dem Pulverbehälter 78 auf der in Fig. 7 rechten Seite des Kolbens 17. In das hinten offene Ende des Pulverbehälters 78 ist ein axialer Vorsprung 81 des Anschlussteils 51, mittels einer Ringdichtung 82 gegen die Innenseite des Pulverbehälters 78 abgedichtet, eingeführt. Auf der vorderen Stirnseite ist der Pulverbehälter 78 durch einen Dichtungsring 83 gegen den Sprühkopf 54 abgedichtet.

In der dem Sprühkopf 54 zugekehrten Öffnung des Pulverbehälters 78 ist wieder die Lochplatte 20 in Form eines Siebes aus nichtrostendem Stahl eingesetzt, so dass sie die halbkugelförmige Wirbelkammer 21 im Sprühkopf 54 begrenzt.

Der Einlasskanal 66 für die Druckluft steht über einen Anschlussstutzen 84, einen flexiblen Verbindungsschlauch 85 und ein in dem aus thermoplastischem Kunststoff bestehenden Körperteil 53 eingebettetes Rohr 86 mit der Einlassöffnung 22 der Wirbelkammer 21 und über einen axial durch die Wand des Anschlussteils 51 hindurchgeführten Druckluftkanal 87, der den Vorsprung 81 sich erweiternd durchsetzt, mit dem Innenraum des Pulverbehälters 78 auf der dem Pulver 80 abgekehrten Seite des Kolbens 17 in Verbindung. Der den Eingang für das Wasser bildende Ringkanal 61 steht über einen nach aussen durch die Wand des Anschlussteils 51 herausgeführten Anschlussstutzen 88, einen flexiblen Verbindungsschlauch 89 und ein weiteres im Körperteil 53 als Austrittskanal eingebettetes Rohr 90 mit einer Austrittsdüse 91 am Sprühkopf 54 in Verbindung.

Die Wirbelkammer 21 steht über die Auslassöffnung 23 und ein den Sprühkopf 54 als Austrittskanal durchsetzendes Rohr 92 mit über die gesamte Länge konstantem Querschnitt mit der Austrittsdüse 91 in Verbindung.

Der Anschlussteil 51 durchsetzt mit seinem vorderen Endabschnitt 93 eine axiale Bohrung 94 im hinteren Endabschnitt 95 des Körperteils 53, wobei der Endabschnitt 93 durch eine Ringdichtung 96 gegen die Innenseite der Bohrung 94 abgedichtet ist.

Auf der Aussenseite ist der Endabschnitt 93 des Anschlussteils 51, wie die Fig. 8 und 10 zeigen, mit sich diametral gegenüberliegenden Führungsnuten 97 und 98 versehen. Die Führungsnuten 97 und 98 erstrecken sich etwa schraubenlinienförmig über etwa ein Viertel des Umfangs des Endabschnitts 93, wobei ihre Steigung von einem hohen positiven Wert in einem langen ersten Abschnitt 99 auf einen geringen negativen Wert in einem kurzen zweiten Abschnitt 100 übergeht und der längere Abschnitt 99 näher als der kürzere Abschnitt 100 bei dem Vorsprung 81 liegt.

Nach den Fig. 7 und 8 ist in der Bohrung 94 des Endabschnitts 95 ein Ring 101 eingesetzt, der mit radial durchgehenden Gewindebohrungen 102, 103 und 104 versehen ist, wobei sich die Gewindebohrungen 102 und 104 diametral gegenüber liegen. Auch der Endabschnitt 95 ist mit radial durchgehenden Bohrungen 105, 106 und 107 versehen, die jeweils mit einer der Bohrungen 102 bis 104 fluchten und einen etwas grösseren Durchmesser als die Bohrungen 102 bis 104 aufweisen. In die Bohrungen 102 bis 104 ist jeweils ein Schraubbolzen 108, 109 und 110 eingeschraubt, wobei die Köpfe aller Schraubbolzen jeweils von den Bohrungen 105 bis 107 aufgenommen werden und die Schraubbolzen 108 und 110 in jeweils eine der Führungsnutzen 97 und 98 eingreifen. Der Schraubbolzen 109 greift dagegen nur in die Gewindebohrung 103 ein. Die Führungsnuten 97 und 98 bilden zusammen mit den Schraubbolzen 108 und 110 einen Bajonett-Verschluss, während der Schraubbolzen 109 lediglich zur Axialsicherung des Rings 101 dient.

Bevor der in der Bohrung 94 und dem Ring 101 verschiebbar und drehbar gelagerte Anschlussteil 51 mit seinem Vorsprung 81 in den Pulverbehälter 78 eingreift, ragen die Bolzen 108 und 110 in die längeren Abschnitte 99 der Führungsnuten 97 und 98. Durch eine Drehung des Anschlussteils 51 wird der Anschlussteil 51 aufgrund der Führung der Schraubbolzen 108 und 110 in den Führungsnuten 97 und 98 nach rechts in Fig. 7 vorgeschoben, bis der Vorsprung 81 in den Pulverbehälter 78 eingreift, wie es in Fig. 7 dargestellt ist, und eine Ringschulter 111 des Anschlussteils 51 am hinteren Öffnungsrand des Pulverbehälters 78 anliegt und den Pulverbehälter 78 nach vorn in Richtung auf die Wirbelkammer 71 schiebt, so dass die Lochplatte 20 mit ihrem rahmenförmigen Umfangsrand 20a gegen den Dichtungsring 83 drückt. In dieser in den Fig. 7 und 8 dargestellten Lage greifen die Schraubbolzen 108 und 110 jeweils in einen der Abschnitte 100 der Führungsnuten 97 und 98 ein, wobei der Anschlussteil 51 aufgrund der geringfügigen Hinterschneidung bzw. negativen Steigung der Abschnitte 100 unter Verrastung axial gesichert wird. Durch eine einfache Rückdrehung des Anschlussteils 51 um etwa eine viertel Umdrehung kann der Anschlussteil 51 bzw. sein Vorsprung 81 mit dem Pulverbehälter 78 ausser Eingriff gebracht werden, um den Pulverbehälter 78, wenn das Pulver 80 verbraucht ist, gegen einen gefüllten Pulverbehälter auszuwechseln.

Der hintere Endabschnitt 95 des Körperteils 53 des Handstücks $H_2$ und der aus diesem Endabschnitt 95 herausragende hintere Endabschnitt 112 des Anschlussteils 51 sind von einer Überwurfhülse 113 umgeben, die auf dem Endabschnitt 95 drehbar gelagert ist. Ferner ist die Überwurfhülse 113 mit einer radialen Gewindebohrung 114 versehen, durch die ein Gewindestift 115 hindurchgeschraubt ist, der in eine radiale Bohrung 116 auf der Aussenseite des Endabschnitts 112 eingreift. Auf diese Weise ist die Überwurfhülse 113 drehfest und axial gesichert mit dem Anschlussteil 51 verbunden, so dass der Anschlussteil 51 mittels der Überwurfhülse 113 von Hand verdrehbar ist. Die Verdrehung der Überwurfhülse 113 wird durch axiale Rillen 117 auf der Aussenseite der Überwurfhülse 113 erleichtert.

Im übrigen ist die Wirkungsweise des Ausführungsbeispiels nach den Fig. 5 bis 10 hinsichtlich der Versprühung des Pulvers 80 weitgehend die gleiche wie die des ersten Ausführungsbeispiels.

**Patentansprüche**

1. Gerät zum Entfernen von Plaque und Verfärbungen auf Zahnoberflächen, durch das ein Luft-Pulver-Gemisch und Wasser auf die zu reinigende Zahnoberfläche gesprüht wird, mit einem Pulverbehälter (16; 78), einer Pulver aus dem Pulvervorrat im Pulverbehälter durch Druckluft aufnehmenden Wirbelkammer (21), die eine Einlassöffnung (22) für die Druckluft und eine Auslassöffnung (23) für das Luft-Pulver-Gemisch aufweist, und mit einem Handstück ($H_1$; $H_2$), das einen Anschlussteil (1; 51) für Zuführleitungen und einen Sprühkopf (4; 54) mit einer Austrittsdüse (36; 91) für das Luft-Pulver-Gemisch und das Wasser aufweist, der das Luft-Pulver-Gemisch aus der Wirbelkammer (21) sowie das Wasser zuführbar sind, dadurch gekennzeichnet, dass der Pulverbehälter (16; 78) und die Wirbelkammer (21) im Handstück ($H_1$; $H_2$) vorgesehen sind, dass der Pulverbehälter (16; 78) mit der Wirbelkammer (21) über eine die Wirbelkammer begrenzende Lochplatte (20) in Austauschverbindung steht, und dass der Pulverbehälter (16; 78) einen druckluftbeaufschlagten Kolben (17) enthält, der das Pulver zur Lochplatte (20) drückt.

2. Gerät nach Anspruch 1, dadurch gekennzeichnet, dass die Druckluft-Einlassöffnung (22) der Wirbelkammer (21) gegenüber der Lochplatte (20) liegt.

3. Gerät nach Anspruch 1 oder 2, dadurch gekennzeichnet, dass die Druckluft dem Kolben (17) über eine Drossel (31) zugeführt wird.

4. Gerät nach einem der Ansprüche 1 bis 3, bei dem die Austrittsdüse einen Austrittskanal für das Luft-Pulver-Gemisch und einen von diesem getrennten Wasser-Austrittskanal aufweist, dadurch gekennzeichnet, dass die Mündung des Austrittskanals (38; 92) für das Luft-Pulver-Gemisch axial gegenüber der Mündung des Wasseraustrittskanals (35; 90) vorsteht.

5. Gerät nach Anspruch 4, dadurch gekennzeichnet, dass die Austrittsdüse (36) so ausgebildet ist, dass der Öffnungswinkel des an der Austrittsdüse (36; 91) austretenden Stroms des Luft-Pulver-Gemisches höchstens etwa 10° beträgt.

6. Gerät nach einem der Ansprüche 1 bis 5, dadurch gekennzeichnet, dass der Sprühkopf (4; 54) die Wirbelkammer (21) aufweist.

7. Gerät nach einem der Ansprüche 1 bis 6, dadurch gekennzeichnet, dass der Anschlussteil (1; 51) Eingänge (11, 13; 61, 66) für Wasser (7) und Druckluft (8) aufweist und zum Anschliessen an ein entsprechendes genormtes Kupplungsstück (2; 52) eines zahnärztlichen Bohrers, das dessen Wasser- und Druckluftversorgung dient, unter Herstellung einer dichten Verbindung zwischen das Kupplungsstück (2; 52) durchsetzenden Wasser- und Druckluftkanälen (9, 12; 59, 65) und den Wasser- und Drucklufteingängen (11, 13; 61, 66) des Anschlussteils (1; 51) ausgebildet ist.

8. Gerät nach einem der Ansprüche 1 bis 3, dadurch gekennzeichnet, dass die Lochplatte (20) als Sieb ausgebildet ist.

9. Gerät nach Anspruch 5, dadurch gekennzeichnet, dass der Endabschnitt (42) des Austrittskanals (38; 92) für das Luft-Pulver-Gemisch bei einer Länge von wenigstens etwa 5 bis 12 mm einen Durchmesser von etwa 0,4 bis 0,8 mm, vorzugsweise 0,7 mm, aufweist.

10. Gerät nach einem der Ansprüche 1 bis 9, bei dem das Handstück eine Griffhülse aufweist, dadurch gekennzeichnet, dass die Griffhülse (3) mit dem Sprühkopf (4) zusammensteckbar ist und der Pulverbehälter (16) die Form eines bei abgenommenem Sprühkopf (4) in die Grifflse (3) einführbaren Rohres aufweist.

11. Gerät nach einem der Ansprüche 1 bis 9, dadurch gekennzeichnet, dass das Handstück ($H_2$) eine seitliche Öffnung (76) zum Einlegen des Pulverbehälters (78) in einen hohlen Körperteil (53) des Handstücks ($H_2$) aufweist und der Anschlussteil (51) in einer axialen Bohrung (94) in dem Körperteil bis gegen den Pulverbehälter (78) zu dessen Lagesicherung verschiebbar und verriegelbar ist.

12. Gerät nach den Ansprüchen 1 und 11, dadurch gekennzeichnet, dass der Anschlussteil (51) durch die Drehverschiebung mit einem axialen Vorsprung (81) abgedichtet in das hinten offene Ende des etwa rohrförmigen Pulverbehälters (78) gegen die Wand des Pulverbehälters abgedichtet einführbar ist, dass das vordere Ende des Pulverbehälters (78) durch die Lochplatte (20) verschlossen ist und im verriegelten Zustand des Anschlussteils (51) an einem Umfangsrand der Wirbelkammer (21) abgedichtet anliegt, und dass durch den Anschlussteil (51) und den Körperteil (53) des Handstücks ($H_2$) verlaufende Abschnitte (61, 66, 84, 88, 86, 90) von Wasser- und Luftzuführkanälen durch eine fluiddichte Drehkupplung (85, 89) verbunden sind und ein Druckluftkanal (87), den Vorsprung (81) durchsetzend, im Pulverbehälter (78) auf der dem Pulver (80) abgewandten Seite des Kolbens (17) mündet.

13. Gerät nach Anspruch 12, dadurch gekennzeichnet, dass die Drehkupplung durch flexible Verbindungsschläuche (85, 89) gebildet ist.

14. Gerät nach einem der Ansprüche 11 bis 13, dadurch gekennzeichnet, dass der Anschlussteil (51) und der Körperteil (53) des Handstücks ($H_2$) durch einen Bajonett-Verschluss verbunden sind.

15. Gerät nach Anspruch 14, dadurch gekennzeichnet, dass der Bajonett-Verschluss wenigstens eine Führungsnut (97; 98) in der Aussenseite des Anschlussteils (51) für einen Bolzen (108; 110) im Körperteil (53) des Handstücks ($H_2$) aufweist, dass die Führungsnut (97; 98) einen weitgehend schraubenlinienförmigen Verlauf aufweist, dessen Steigung von einem hohen positiven Wert in einem langen Abschnitt (99) der Führungsnut auf einen geringen negativen Wert in einem kurzen Abschnitt (100) der Führungsnut übergeht, und dass der Bolzen am Ende der Verriegelungsbewegung in den die negative Steigung aufweisenden kurzen Abschnitt (100) der Führungsnut eingreift.

16. Gerät nach einem der Ansprüche 4, 5 und 9, dadurch gekennzeichnet, dass der Austrittskanal (92) für das Luft-Pulver-Gemisch über seine gesamte Länge einen konstanten Querschnitt aufweist.

**Revendications**

1. Appareil pour enlever la plaque et les changements de couleur sur les surfaces dentaires, par lequel un mélange d'air et de poudre et de l'eau sont pulvérisés sur les surfaces des dents à nettoyer, comprenant un réceptacle à poudre (16; 78), une chambre tourbillonnaire (21) recevant au moyen d'air comprimé une poudre provenant de la réserve de poudre dans le réceptacle à poudre, chambre qui comprend une ouverture d'entrée (22) pour l'air comprimé et une ouverture de sortie (23) pour le mélange d'air et de poudre, et comprenant un dispositif à main ($H_1$; $H_2$) comportant une partie de raccordement (1; 51) pour des conduites d'alimentation et une tête de pulvérisation (4; 54) avec une buse de sortie (36; 91) pour le mélange d'air et de poudre et pour l'eau, à laquelle le mélange d'air et de poudre provenant de la chambre tourbillonnaire (21) ainsi que l'eau peuvent être envoyés, caractérisé en ce que le réceptacle à poudre (16; 78) et la chambre tourbillonnaire (21) sont prévus dans le dispositif à main ($H_1$; $H_2$), en ce que le réceptacle à poudre (16; 78) est en liaison d'échange avec la chambre tourbillonnaire (21) par l'intermédiaire d'une plaque ajourée (20) limitant la chambre tourbillonnaire, et en ce que le réceptacle à poudre (16, 78) contient un piston (17) soumis à l'action de l'air comprimé et qui refoule la poudre par les trous de la plaque ajourée (20).

2. Appareil selon la revendication 1, caractérisé en ce que l'ouverture d'entrée d'air comprimé (22) de la chambre tourbillonnaire (21) est disposée face à la plaque ajourée (20).

3. Appareil selon la revendication 2, caractérisé en ce que l'air comprimé est envoyé vers le piston (17) par l'intermédiaire d'un étranglement (31).

4. Appareil selon l'une quelconque des revendications 1 à 3, dans lequel la buse de sortie comprend un canal de sortie pour le mélange d'air et de poudre et un canal de sortie d'eau séparé de ce dernier, caractérisé en ce que l'embouchure du canal de sortie (38; 92) destiné au mélange d'air et de poudre est en saillie axiale par rapport à l'embouchure du canal de sortie d'eau (35; 90).

5. Appareil selon la revendication 4, caractérisé en ce que la buse de sortie (36) est constituée de manière que l'angle d'ouverture du courant du mélange d'air et de poudre qui sort par la buse de sortie (36; 91) soit au maximum de 10° environ.

6. Appareil selon l'une quelconque des revendications 1 à 5, caractérisé en ce que la tête de pulvérisation (4; 54) comprend la chambre tourbillonnaire (21).

7. Appareil selon l'une quelconque des revendications 1 à 6, caractérisé en ce que la partie de raccordement (1; 51) comprend des entrées (11; 13; 61, 66) pour l'eau (7) et pour l'air comprimé (8), et est constituée pour être raccordée à un élément d'accouplement normalisé correspondant (2; 52) d'une fraise de dentiste, qui sert à son alimentation en eau et en air comprimé (9, 12; 59, 65) qui traversent l'élément d'accouplement (2; 52) et les entrées d'eau et d'air comprimé (11, 13; 61, 66) de la partie de raccordement (1; 51).

8. Appareil selon l'une quelconque des revendications 1 à 3, caractérisé en ce que la plaque ajourée (20) est constituée sous forme d'un tamis.

9. Appareil selon la revendication 5, caractérisé en ce que la section d'extrémité (42) du canal de sortie (38; 92) destiné au mélange d'air et de poudre présente, pour une longueur d'au moins 5 à 12 mm environ, un diamètre d'environ 0,4 à 0,8 mm et de préférence de 0,7 mm.

10. Appareil selon l'une quelconque des revendications 1 à 9, dans lequel le dispositif à main comprend une douille de saisie, caractérisé en ce que la douille de saisie (3) peut être raccordée à la tête de pulvérisation (4) et le réceptacle à poudre (16) a la forme d'un tube pouvant être introduit dans la douille de saisie (3) quand la tête de pulvérisation (4) est retirée.

11. Appareil selon l'une quelconque des revendications 1 à 9, caractérisé en ce que le dispositif à main ($H_2$) comprend une ouverture latérale (76) pour disposer la réceptacle à poudre (78) dans une partie de corps creuse (53) du dispositif à main ($H_2$) et la partie de raccordement (51) peut être déplacée et verrouillée dans un alésage axial (94) de la partie de corps jusque contre le réceptacle à poudre (78) en vue de sa fixation en position.

12. Appareil selon l'une quelconque des revendications 1 à 11, caractérisé en ce que la partie de raccordement (51) peut être introduite de façon étanche contre la paroi du réceptacle à poudre par le déplacement tournant, au moyen d'une saillie axiale 81 rendue étanche dans l'extrémité arrière ouverte du réceptacle à poudre (78) qui est sensiblement de forme tubulaire, en ce que l'extrémité avant du réceptacle à poudre (78) est fermée par la plaque ajourée (20) et repose de façon étanche contre un bord périphérique de la chambre tourbillonnaire (21) à l'état verrouillé de la partie de raccordement (51), et en ce que les sections (61, 66, 84, 88, 86, 90) des canaux à eau et à air passant dans la partie de raccordement (51) et dans la partie de corps (53) du dispositif à main ($H_2$) sont reliées par un accouplement tournant étanche aux fluides (85, 89), et un canal à air comprimé (87) qui traverse la saillie (81) débouche dans le réceptacle à poudre (78) sur le côté du piston (17) qui est à l'opposé de la poudre (80).

13. Appareil selon la revendication 12, caractérisé en ce que l'accouplement tournant est constitué par un tuyau de liaison flexible (85, 89).

14. Appareil selon l'une quelconque des revendications 1 à 13, caractérisé en ce que la partie de raccordement (51) et la partie de corps (53) du dispositif à main ($H_2$) sont reliées par une fermeture à baîonnette.

15. Appareil selon la revendication 14, caractérisé en ce que la fermeture à baîonnette comprend au moins una rainure de guidage (97; 98) sur le côté externe de la partie de raccordement (51), destinée à un boulon (108; 110) de la partie de corps (53) du dispositif à main ($H_2$), en ce que la rainure de guidage (97; 98) a sensiblement la forme d'une ligne hélicoîdale, dont l'inclinaison passe d'une valeur positive élevée dans une section de grande longueur (99) de la rainure de guidage à une faible valeur négative dans une section de courte longueur (100) de la rainure de guidage, et en ce que le boulon pénètre à la fin du mouvement de verrouillage dans la courte section (100) de la rainure de guidage qui présente l'inclinaison négative.

16. Appareil selon les revendications 4, 5 et 9, caractérisé en ce que le canal de sortie (92) du mélange d'air et de poudre présente une section constante sur la totalité de sa longueur.

## Claims

1. Apparatus for the removal of plaque and discolourations on dental surfaces by means of which an air powder mixture and water is sprayed onto the dental surface to be cleaned, with a powder container (16; 78), a turbulence chamber (21) receiving powder from the powder store in the powder container through compressed air, which has an inlet opening (22) for the compressed air and an outlet opening (23) for the air powder mixture, and which has a handpiece ($H_1$; $H_2$) which has a connection part (1; 51) for feed leads and a spray head (5; 54) with an exit nozzle (36; 91) for the air powder mixture and the water, to which the air powder mixture from the turbulence chamber (21) as well as the water can be fed, characterised in that the powder container (16; 78) and the turbulence chamber (21) are provided in the handpiece ($H_1$; $H_2$) that the powder container (16; 78) is in exchangeable connection with the turbulence chamber (21) via a perforated plate (20) limiting the turbulence chamber and that the powder container (16; 78) contains a piston (17) subjected to compressed air which presses the powder towards the perforated plate (20).

2. Apparatus according to Claim 1, characterised in that the compressed air inlet opening (22) of the mixing chamber (21) lies opposite the perforated plate (20).

3. Apparatus according to Claim 1 or 2, characterised in that the compressed air is fed to the piston (17) via a throttle (31).

4. Apparatus according to one of Claims 1 ot 3, in which the outlet nozzle has an outlet channel for the air powder mixture and a water outlet channel separated from this, characterised in that the mouth of the exit channel (38; 92) for the air powder mixture projects axially opposite the mouth of the water outlet channel (35; 90).

5. Apparatus according to Claim 4, characterised in that the outlet nozzle (36) is so constructed that the spreading angle of the flow emerging at the outlet nozzle (36; 91) of the air powder mixture amounts to at most 10°.

6. Apparatus according to one of Claims 1 to 5, characterised in that the spray head (4; 54) includes the mixing chamber (21).

7. Apparatus according to one of Claims 1 to 6, characterised in that the connection part (1; 51) has inlets (11, 13; 61, 66) for water (7) and compressed air (8) and is constructed for connection to a correspondingly standardised coupling piece (2; 52) of a dentist's drill which makes use of its water and compressed air supplies with the formation of a sealed connection between the water and compressed air channels (9, 12; 59, 65) passing through the coupling piece (2; 52) and the water and compressed air inlets (11, 13; 61, 66) of the connection part (1; 51).

8. Apparatus according to one of Claims 1 to 3, characterised in that the perforated plate (20) is constructed as a sieve.

9. Apparatus according to Claims 5, characterised in that the end section (42) of the exit channel (38; 92) for the air powder mixture with a length of at least about 5 to 12 mm has a diameter of around 0.4 to 0.8 mm, preferably 0.7 mm.

10. Apparatus according to one of Claims 1 to 9, in which the handpiece has a gripping cover, characterised in that the gripping cover (3) can be assembled together with the spray head (4) and the powder container (16) has the shape of a tube which dan be led into the gripping cover (3) with the spray head (4) taken off.

11. Apparatus according to one of Claims 1 to 9, characterised in that the handpiece ($H_2$) has a lateral opening (76) for the insertion of the powder container (78) into a hollow body portion (53) of the handpiece ($H_2$) and the connection part (51) can be slid and locked for positional security into an axial bore (94) in the body part up against the powder container (78).

12. Apparatus according to Claims 1 and 11, characterised in that the connection part (51) sealed by the rotational moving with an axial projection (81) can be introduced sealed into the rearwardly open end of the essentially tubular powder container (78) against the wall of the powder container, that the forward end of the powder container (78) is closed by the perforated plate (20) and lies sealed in the locked condition of the connection part (51) against a peripheral rim of the mixing chamber (21) and that sections (61, 66, 84, 88, 86, 90) of water and air feed channels running through the connection part (51) and the body part (53) of the handpiece ($H_2$) are connected together by a fluid-type rotational coupling (85, 89) and a compressed air channel (87), passing through the projection (81), debouches into the powder container (78) on the side of the piston (17) remote from the powder (80).

13. Apparatus according to Claim 12, characterised in that the rotational coupling is constituted by flexible connection hoses (85, 89).

14. Apparatus according to one of Claims 11 to 13, characterised in that the connection part (51) and the body part (53) of the handpiece ($H_2$) are connected together by a bayonet closure.

15. Apparatus according to Claim 14, characterised in that the bayonet closure has at least one guide groove (97; 98) in the outer side of the connection part (51) for a pin (108; 110) in the body part (53) of the handpiece ($H_2$), that the guide groove (97; 98) has a substantially helical-shaped run, the inclination of which runs from a high positive value in a long section (99) of the guide groove to a small negative value in a short section (100) of the guide groove and that the pin at the end of the locking movement engages in the short section (100) of the guide groove having the negative inclination.

16. Apparatus according to one of Claims 4, 5 and 9, characterised in that the exit channel (92) for the air powder mixture has a constant cross-section over its entire length.

Fig.2
Fig.1
Luft
Wasser

2/6

Fig.3
16
3
21
20
23
22
39
39
33
19
46
26

Fig.4
12
8
6
Luft
Wasser
7
10
9
2

Fig.5
54
91
76
53
79
$H_2$
78
113
117
115
Fig.6
79
$H_2$
78
53
113
117
115

4/6

5/6

Fig. 9
Fig. 8
53
79
77
92
23
86
22
90
86
20
83
21
78
76
VII
109
103
106
117
117
113
105
108
110
107
104
98
100
99
99
100
62
97
102
101
51
90
86

Fig. 10

Fig. 11

Wasser
Luft